# EUROPEAN PATENT SPECIFICATION

(11) **EP 1 790 558 B1**
(45) Date of publication and mention of the grant of the patent: **14.01.2009**
(21) Application number: 06019626.8
(22) Date of filing: 20.09.2006
(51) Int. Cl.: B62J 15/02

(54) **Attachment device, in particular for a mudguard and a support rod**
Halteteil, insbesondere für ein Schutzblech und einen Stützstab
Dispositif de fixation, en particulier pour un garde-boue et une tige de support

(30) Priority: 29.11.2005 IT VI20050315
(43) Date of publication of application: 30.05.2007
(73) Proprietor: Passuello, Ivan, 31020 San Zenone Degli Ezzelini TV (IT)
(72) Inventor: Passuello, Ivan, 31020 San Zenone Degli Ezzelini TV (IT)
(74) Representative: Bettello, Pietro

(56) References cited:
- EP-A- 0 967 141
- DE-U1- 20 008 005
- NL-C2- 1 022 857

## Description

The present invention relates to an attachment device for a mudguard and a support rod, used in the assembly of mudguards on bicycles.

It is known that in order to mount mudguards on support rods attached to bicycle frames, a variety of different fixing devices are normally used, the simplest of which are based on a plain clip attached directly onto the mudguard using screws. Other more sophisticated devices are composed of a type of clamp produced in a molded synthetic material, basically composed of two portions hinged together, conceived to grip around the rim of the mudguard and the support rod by tightening a screw.

This type of solution presents certain limitations, the main one being the fact that the use of screws is necessary, which is a disadvantage not only from the point of view of appearance, whereby parts are added, which oxidize over time due to atmospheric elements, but also from an economic point of view, because it prolongs assembly time and often makes the fixing devices impossible to use again in the future.

In an attempt to resolve part of the problems described above, other types of devices have been conceived, among which are two which have a similar concept, composed of male and female elements that can be united together, thus permitting the attachment of the support rod without the need for metal screws, but which require attaching specific fixings onto the mudguard previously. In the first type, the two elements are screwed to each other and are able to retain the support rod internally by using their conical shape for this purpose, while the other type is composed of two elements, one inserted in the other during an initial stage, and later attached to each other by a click fastening action.

The main disadvantage with these fixing devices has been stated above, in that they require other accessories that must be mounted on the mudguard, making it more expensive, longer to assemble, and creating a less streamlined appearance.

Another large problem concerns the screw models because of the cost of equipment for the construction stage. Two separate moulds must be manufactured able to produce the die to create the internal thread.

And this is very expensive, and in spite of cost, the final result is often not as effective as expected because the component wall is rather thin.

On the other hand, models with a double click-on action often pose problems in remaining attached and are subject to becoming detached by chance from the support rod.

In EP-A-0967141 is described an attachment device that can be removed and attached to a support rod and a mudguard without the help of screws or other accessories.

The aim of the invention is to provide a similar attachment device which is able to guarantee a stronger and safer action being also easier and faster to apply on respect of the cited device of the prior art.

This is obtained with a device realized according to the characterising portion of claim 1.

Further characteristics and advantages will be made more clear in the description of a preferred but not exclusive embodiment, of an attachment device according to the invention, illustrated in an indicative but by no means limiting manner in the appended drawings wherein:

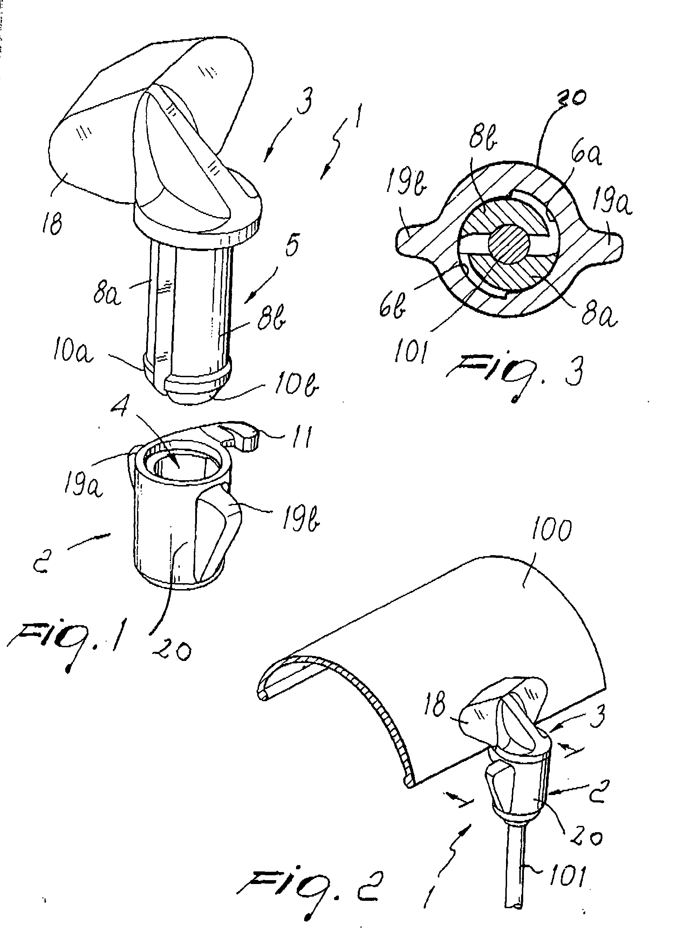

Figure 1 is a view in perspective of an attachment device according to the invention;
Figure 2 is a view in perspective of an attachment device according to the invention applied to a mudguard and a support rod;
Figure 3 is a cross section of an attachment device according to the invention, in its fixing position;

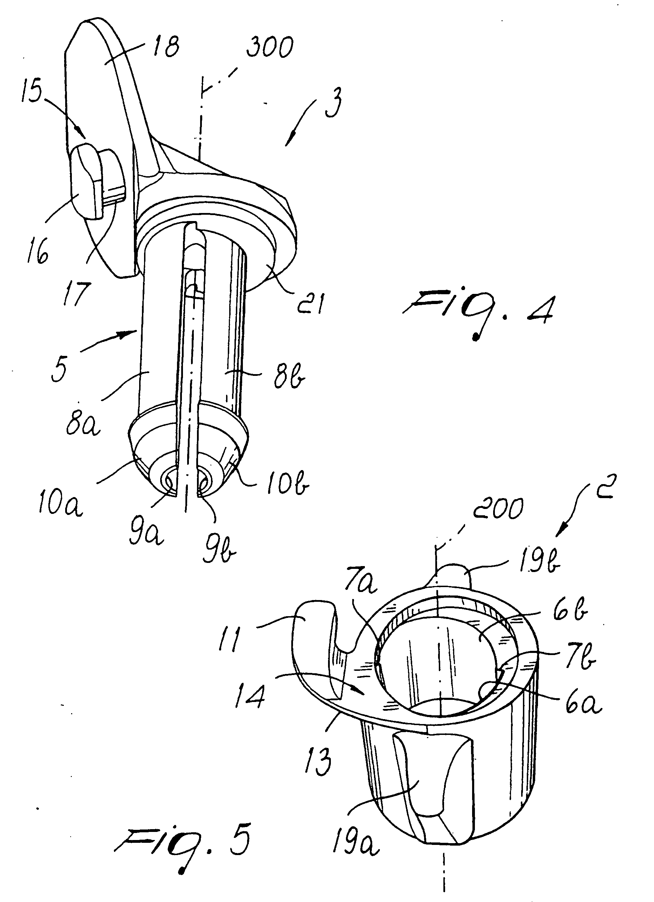

Figure 4 is a view in perspective of a first component of an attachment device according to the invention;
Figure 5 is a view in perspective of a second component of an attachment device according to the invention;

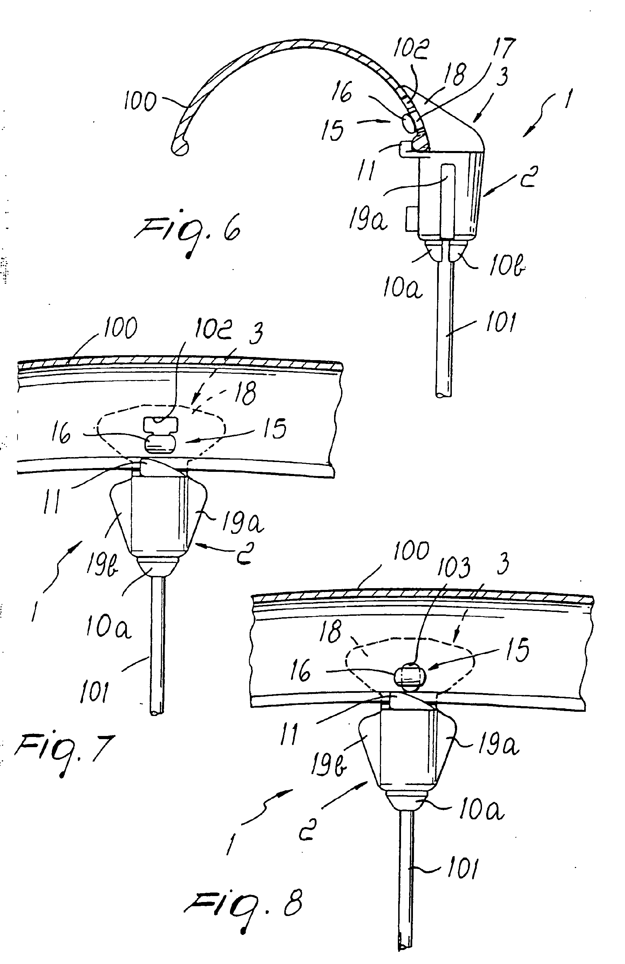

Figure 6 is a side view in elevation and a partial cross section of a first embodiment of an attachment device according to the invention, attached to a mudguard and a support rod;
Figure 7 is a front view and a partial cross section of the interior of a mudguard and an attachment device attached as shown in the previous drawing;
Figure 8 is a front view and a partial cross section of the interior of a mudguard and an attachment device attached according to a second embodiment;

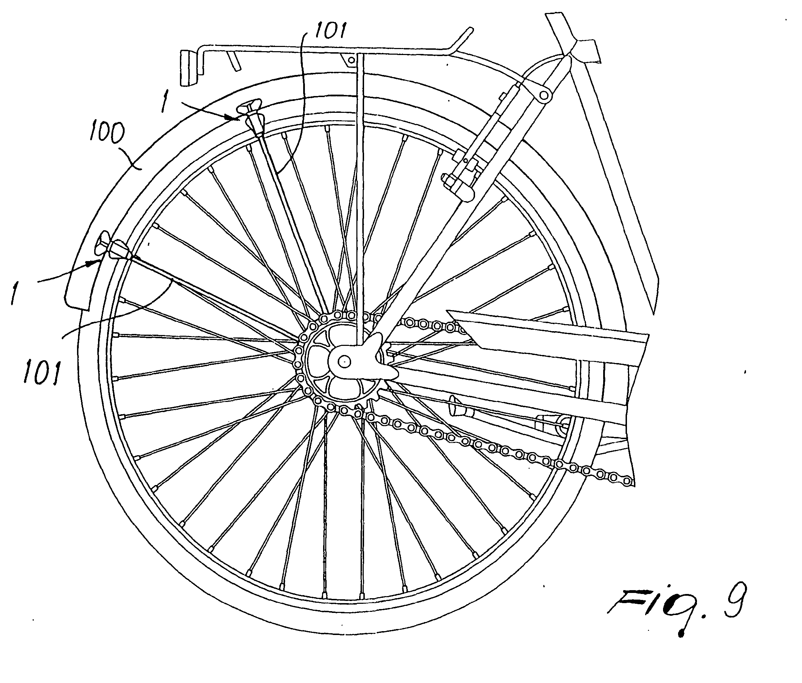

Figure 9 is a side view of a portion of a bicycle and an example of the attachment device in use according to the invention.

With reference to the figures described above, the attachment device, in particular for mudguards and support rods, is identified throughout by the numeral 1, comprising a female element 2 and a male element 3, advantageously manufactured in a molded synthetic material, removably attachable to each other, to a mudguard 100, and to a support rod 101.

According to the invention the attachment device 1 comprises rotating means of fixation composed of a through housing 4, on the female element 2, and a retainer organ 5, configured in a single piece with the male element 3, which permit the removable fixing of the attachment device 1 to the mudguard, although indirectly, and to the support rod, changing from a rest position to a fixing position by a 90° rotation, with the help of two protruding lugs 19a and 19b in diametrically opposite positions on the body of the female element 2. More specifically, the through housing 4 is composed of a pair of semi-circular cavities 6a and 6b, which are slightly tapered and with a basically semi-elliptic cross section, united at the larger diameter with a staggered configuration that creates two diametrically opposite recesses 7a and 7b along the total length of the through housing 4. The retainer organ 5 configured with a cross section basically complementary to the cross section of the through housing 4, although smaller in size, is composed of a pair of semi-cylindrical components 8a and 8b, facing each other but not united, on the side relative to the diameter. Said semi-cylindrical components 8 are also staggered, although they are at a small distance from each other, and said staggered configuration is greater than that of the semi-cylindrical cavities 6. On the median longitudinal axis 300 of the retainer organ is a guide 9, with a cross section that is basically complementary to the cross section of the support rod 101, which is in contact with the retainer organ 5 for its total length, a section which is divided into the two portions 9a and 9b, and is extended partially into the male element 3, to permit any tension transmitted by the support rod 101 to be released onto the mudguard, thus preventing any structure flexion and possible rupture. To facilitate and maintain the coupling action between the female element 2 and the male element 3, the retainer organ 5 is equipped with a spike head composed of two half-truncated cones 10a and 10b, centered on the median longitudinal axis 300 of the retainer organ and united with the respective semi-cylindrical components 8.

In order to arrest the rotation action of the male element with the female element in the correct position, and to maintain the effect by preventing the rotating means of fixation from accidentally returning from the fixed position to rest position by an undesired backward rotation of the female element 2, two blocking means are appropriately positioned on the female element 2, composed of a specifically shaped pawl 11, having a basically wedge-shaped form in order to permit single direction rotation only, by means of advantageous interaction with the side rim of the mudguard 100, being united with the body of the female element 2 by means of a pedicle 13, positioned in proximity to the sharp end of the wedge.

The attachment device 1 can be removably attached to the mudguard 100 by means of a coupling composed of a contact surface 14, defined by the pedicle 13 tilted with respect to to the median longitudinal axis 200 of the through housing , and by a toggle pin 15, united in a single body with the male element 3. The toggle pin 15, comprises a ellipsoidal head 16 and a rigid stem 17, united with the male element so that its longitudinal axis is tilted with respect to to the median longitudinal axis 300 of the retainer organ. Said means of connection interact with a plurality of specifically shaped notches 102, basically configured in a T-shape, and previously cut in proximity to the side rim of the mudguard 100, with the portion parallel with said side rim having a form that is basically complementary with the profile of the ellipsoidal head 16, in a manner to permit the passage of the head, and the portion which is at right-angles to the side rim of the mudguard, having a form that is complementary to that form of the rigid stem 17. In another embodiment, the specifically shaped notches 102 can be replaced with a plurality of slots 103, cut in proximity to the side rim of the mudguard 100 and with a shape basically complementary to the profile of the ellipsoidal head 16, but set in a direction so that the slot is at right-angles to the head when the attachment devices 1 are in their fixing position.

The attachment of the connection device 1 to the mudguard 100 is facilitated and aided by the presence of a concave fin 18 positioned in proximity to the toggle pin 15, and tilted with respect to to the rigid stem 17, with a curve that is complementary to that of the mudguard 100.

The efficacy of the rotating means of fixation is guaranteed by an eccentric rotation seat 20, having a cylindrical configuration positioned at the end of the through housing 4 close to the strike surface 14, and by an eccentric rotating pin 21, having a configuration complementary to that of the eccentric rotation seat 20, positioned on the end of the retainer organ 5 united with the male element 3. While the eccentric rotation seat 20 is conceived so that in relation to the centre of the eccentric rotation seat 20, the median longitudinal axis 200 of the through housing is decentralized in the direction of the specifically shaped pawl 11, the eccentric rotation pin 21 is conceived so that, in relation to the centre of the eccentric rotation pin 21, the median longitudinal axis of the retainer organ 5 is decentralized in the direction of the toggle pin 15.

The device according to the invention functions as follows:
After having positioned the male element 3 and the female element 2 in a manner so that the larger diameters of the semi-cylindrical cavities 6 are basically parallel to the aforesaid diameters of the semi-cylindrical components 8, and that the median longitudinal axis 300 of the retainer organ is basically aligned with the median longitudinal axis of the through housing , it is sufficient to exercise a little pressure to unite the male element 3 and the female element 2 removably with a click-on action, introducing the retainer organ 5 into the through housing 4, aided with the help of the spike head which, thanks to the space between the half-truncated cones 10 is deformed during insertion, then returning to its original size and shape, and in this manner, preventing any accidental escape. At the same time as the insertion of the retainer organ 5 into the through housing 4, the eccentric rotation pin 21 is inserted into the eccentric rotation seat 20. This forms a type of fifth wheel which later guides the rotation. The whole connection device 1 is attached to the mudguard 100 by inserting the ellipsoidal head 16 of the toggle pin 15 into one of the specifically shaped notches 102, resulting in the consequential contact between the surface of the concave fin 18 with the surface of the mudguard 100, and by sliding the rigid stem 17 of the toggle pin 15 into the portion of the specifically shaped notches 102 tilted with respect to to the rim of the mudguard 100. After this, the support rod 101 is inserted into the guide 9 and the female element 2 is rotated about 90° in relation to the male element 3, by gripping the protruding lugs 19 to help rotation. Said rotation that places the larger diameters of the semi-cylindrical cavities 6 at right-angles to the diameters of the semi-cylindrical components 8, and that is guided by the eccentric rotation pin 21 and by the eccentric rotation seat 20 has basically two fundamental effects: the first is that it provokes a constriction of the retainer organ 5 which is slightly deformed to adapt to the shape of the semi-cylindrical cavities 6, and therefore performs a clamping action on the support rod 101, maintaining it in the guide 9 and preventing it from being released and falling out. The second effect is that the side rim of the mudguard 100 interacts with the specifically shaped pawl 11, which, taking advantage of its wedge configuration that facilitates the interaction and ensures the movement in a single direction, moving past it during the rotation, bringing the strike surface 14 exactly into contact with the side rim of the mudguard 100, preventing any accidental sliding action by the rigid stem 17 in the portion of the specifically shaped notch 102 in which it is inserted. Therefore, in this manner, a correct and stable union is obtained between the attachment device 1 and the mudguard 100. The interaction between the specifically shaped pawl 11 and the mudguard 100 also prevents any accidental return rotation by the female element 2, which could otherwise return to its rest position, thus loosening the clamp action on the support rod 101, and in this way completely canceling or considerably reducing the effect of the rotating fixation means.

In the case where the specifically shaped notch 102 is replaced by the slot 103, the only variation lies in the manner in which the attachment device 1 is united with the mudguard 100. In fact, in this case the ellipsoidal head 16 must be inserted into one of the slots 103, and with a little pressure, must counter the spring effect created by the concave fin 18. Then the whole connection device 1 is rotated about 90° so that the ellipsoidal head 16 is set tilted with respect to to the slot 103.

If the safety catch on the mudguard 100 is released from the support rod 101 in the case of abnormal stress, in any case, it is guaranteed by the fact that the support rods 101 are retained exclusively by means of a constriction due to friction, and for disassembly, the operations described above should simply be performed in reverse order.

It has been demonstrated that the connection device for mudguards and support rods according to the invention, fully achieves the aim as required, since it can guarantee the possibility of inserting a support rod and a mudguard at the same time in a removable manner without the need for screws or other accessories.

Furthermore, the attachment device according to the invention is also robust and safe, simple and rapid to apply, without the need for fixation using rivets, screws or special tools.

Numerous modifications and variants can be applied to the attachment device thus conceived device while still remaining within the context of the invention defined by the claims.

Practically speaking, on condition that they are compatible with the specific use in question, the materials employed, their size and relative shape can be of any type according to requirements and the state of the art.

## Claims

1. ATTACHMENT DEVICE for mudguards (100) and support rods (101), comprising a male element (3) composed of a guide adapted for receiving said support rod, and a female element (2) removably coupled with said male element (3), said attachment device being removably attachable to said mudguard, said device
comprising a rotating fixation means to removably fasten said attachment device to said mudguard, and to removably fasten said support rod to said attachment device, by changing from a rest position to a fixing position, said device being**characterised in that** said rotating fixation means comprise a through housing (4) inside said female element, said through housing being composed of a pair of semi-cylindrical cavities (6a, 6b), united on the side relative to the larger diameter and staggered in a manner so that this forms a pair of recesses (7a, 7b), diametrically opposite each other for the total length of the through housing, each of the two semi-cylindrical cavities having a basically semi-elliptic cross section.

2. ATTACHMENT DEVICE according to the previous claim, **characterised in that** said rotating fixation means can be operated by the relative rotation of said male element and said female element, by basically a 90° turn.

3. ATTACHMENT DEVICE according to one or more of the previous claims, **characterised in that** said through housing comprises a tapered configuration.

4. ATTACHMENT DEVICE according to one or more of the previous claims, **characterised in that** said rotation fixing means comprise a retainer organ (5) attached to the male element in a single piece, said retainer organ having a cross section that is basically complementary to the cross section of said through housing , and being composed of two semi-cylindrical components (8a, 8b), which are facing each other but not united, on the side in relation to the diameter, said semi-cylindrical components being staggered to a greater extent than said semi-cylindrical cavities (6), said diameters of said semi-cylindrical components being basically parallel with said larger diameters of said semi-cylindrical cavities when in said rest position, and being at right-angles to said larger diameters of said semi-cylindrical cavities when in said fixed position.

5. ATTACHMENT DEVICE according to claim 4, **characterised in that** said retainer organ comprises a guide with a cross section that is basically complementary to the cross section of said support rod, said guide being positioned on the median longitudinal axis of said retainer organ along its total length, extending partially inside said male element.

6. ATTACHMENT DEVICE according to claim 4 or 5, **characterised in that** said retainer organ comprises a spike head, basically composed of two half-truncated cones (10a, 10b), centered in relation to said median longitudinal axis of said retainer organ and respectively united with said semi-cylindrical components.

7. ATTACHMENT DEVICE according to the previous claim, **characterised in that** said rotating fixation means comprise blocking means to removably arrest said rotation and to ensure it rotates in a single direction.

8. ATTACHMENT DEVICE according to claim 7, **characterised in that** said blocking means comprise a specifically shaped pawl which interacts with said mudguard, said specifically shaped pawl (11) being basically configured in a wedge shape and being united integrally with said female element in a single piece, by means of a pedicle (13) positioned in proximity to the sharp rim of said wedge.

9. ATTACHMENT DEVICE according to one or more of the previous claims, **characterised in that** said rotating fixation means comprise attaching means to fix said connection device to said mudguard.

10. ATTACHMENT DEVICE according to claim 8, **characterised in that** said attaching means comprise a abutment surface (14) defined by said pedicle (13), set tilted with respect to to said median longitudinal axis of said through housing.

11. ATTACHMENT DEVICE according to one or more of the previous claims, **characterised in that** said attaching means comprise a toggle pin (15), having an ellipsoidal head (16) that forms a single element with a rigid stem (17), said rigid stem being united with said male element, and being positioned with its longitudinal axis tilted with respect to to said median longitudinal axis of said retainer organ.

12. ATTACHMENT DEVICE according to claim 11, **characterised in that** said mudguard comprises a plurality of specifically shaped notches (102), configured in the form of a T and formed in proximity to said side rim, the portion of each of said specifically shaped notches basically parallel to said side rim having a form that is basically complementary to the profile of said ellipsoidal head, the portion of each of said specifically shaped notches tilted with respect to said side rim having a form that is basically complementary to the profile of said rigid stem (17).

13. ATTACHMENT DEVICE according to claim 11 or 12, **characterised in that** said mudguard comprises a plurality of slots (103), positioned in proximity to its side rim and having a form that is basically complementary to the profile of said ellipsoidal head, said slots being arranged in a manner so that their longitudinal axis is tilted with respect to the longitudinal axis of said ellipsoidal head, when in said fixed position.

14. ATTACHMENT DEVICE according to claim 11, 12 or 13, **characterised in that** said fixing means comprise a pair of fins provided by said male element in proximity to said toggle pin tilted with respect to to said longitudinal axis of said rigid stem.

15. ATTACHMENT DEVICE according to one or more of claims 11 to 14, **characterised in that** said through housing comprises an eccentric rotation seat, with a basically cylindrical configuration positioned on said female element in proximity to said strike surface, the median longitudinal axis (200) of said through housing being decentralized in the direction of the said specifically shaped pawl, in relation to the centre of said eccentric rotation seat.

16. ATTACHMENT DEVICE according to one or more of claims 11 to 15, **characterised in that** said retainer organ comprises an eccentric rotation pin with a configuration basically complementary to that of the eccentric rotation seat, provided on the end of said retainer organ united with said male element, the median longitudinal axis of said retainer organ being decentralized in the direction of said toggle pin in relation to the centre of said eccentric rotation pin.

17. ATTACHMENT DEVICE according to one or more of the previous claims, **characterised in that** said female element (19) comprises a pair of protruding lugs (19) positioned diametrically opposite each other.

## Patentansprüche

1. Halteteil für Schutzbleche (100) und Stützstäbe (101), umfassend ein männliches Element (3), bestehend aus einer zur Aufnahme des Stützstabes angepassten Führung, und ein weibliches Element (2), das entfernbar mit dem männlichen Element (3) verbunden ist, wobei das Halteteil entfernbar an dem Schutzblech angebracht werden kann, wobei die Vorrichtung ein drehbares Fixierungsmittel zum entfernbaren Befestigen des Halteteils an dem Schutzblech und zum entfernbaren Befestigen des Stützstabes an dem Halteteil durch Wechsel von einer Ruheposition in eine Fixierungsposition umfasst, wobei die Vorrichtung **dadurch gekennzeichnet ist, dass** das drehbare Fixierungsmittel ein durchgehendes Gehäuse (4) innerhalb des weiblichen Elements umfasst, wobei das durchgängige Gehäuse aus einem Paar halbzylindrischer Hohlräume (6a, 6b) besteht, die an der Seite relativ zu dem größeren Durchmesser vereinigt sind und derart gestaffelt, dass ein Paar Ausnehmungen (7a, 7b) diametral einander gegenüber liegend für die gesamte Länge des durchgehenden Gehäuses gebildet werden, wobei jede der beiden halbzylindrischen Hohlräume einen im Wesentlichen halbelliptischen Querschnitt aufweist.

2. Halteteil gemäß dem vorstehenden Anspruch, **dadurch gekennzeichnet, dass** das drehbare Fixierungsmittel durch die relative Drehung des männlichen Elements und des weiblichen Elements um im Wesentlichen 90° betätigt werden kann.

3. Halteteil nach einem oder mehreren der vorstehenden Ansprüche, **dadurch gekennzeichnet, dass** das durchgängige Gehäuse eine konische Konfiguration aufweist.

4. Halteteil nach einem oder mehreren der vorstehenden Ansprüche, **dadurch gekennzeichnet, dass** das drehbare Fixierungsmittel ein Halteorgan (5) umfasst, das einstückig mit dem männlichen Element verbunden ist, wobei das Halteorgan einen Querschnitt aufweist, der im Wesentlichen komplementär zu dem Querschnitt des durchgängigen Gehäuses ist, und aus zwei halbzylindrischen Komponenten (8a, 8b) zusammengesetzt ist, welche an der Seite in Bezug zum Durchmesser einander zugewandt aber nicht vereinigt sind, wobei die halbzylindrischen Komponenten stärker abgestuft sind als die halbzylindrischen Hohlräume (6), wobei die Durchmesser der halbzylindrischen Komponenten im Wesentlichen parallel mit den größeren Durchmesser der halbzylindrischen Hohlräume sind, wenn sie sich in der Ruheposition befinden, und im rechten Winkel zu den größeren Durchmessern der halbzylindrischen Hohlräume, wenn sie sich in der fixierten Position befinden.

5. Halteteil nach Anspruch 4, **dadurch gekennzeichnet, dass** das Halteorgan eine Führung mit einem Querschnitt umfasst, der im wesentlich komplementär zu dem Querschnitt des Stützstabes ist, wobei die Führung an der medianen Längsachse des Halteorgans entlang seiner gesamten Länge angebracht ist und sich teilweise in das männliche Element hinein erstreckt.

6. Halteteil nach Anspruch 4 oder 5, **dadurch gekennzeichnet, dass** das Halteorgan einen Hakenkopf umfasst, der sich im Wesentlichen aus zwei halben Kegelstümpfen (10a, 10b) zusammensetzt und in Bezug zu der medianen Längsachse des Halteorgans zentriert bzw. mit den halbzylindrischen Komponenten vereinigt ist.

7. Halteteil gemäß dem vorstehenden Anspruch, **dadurch gekennzeichnet, dass** das drehbare Fixierungsmittel Blockiermittel zum entfernbaren Arretieren der Drehbewegung und zum Sicherstellen seiner Drehung in eine einzige Richtung umfasst.

8. Halteteil nach Anspruch 7, **dadurch gekennzeichnet, dass** das Blockiermittel eine spezifisch ausgeformte Knarre umfasst, die mit dem Schutzblech zusammenwirkt, wobei die spezifisch ausgeformte Knarre (11) im Wesentlichen keilförmig konfiguriert und integral einstückig mit dem weiblichen Element vereinigt ist, und zwar mittels eines Stiels (13), der nahe der Schaufelkante des Keils angeordnet ist.

9. Halteteil nach einem oder mehreren der vorstehenden Ansprüche, **dadurch gekennzeichnet, dass** das drehbare Fixierungsmittel Anbringungsmittel umfasst, zum Befestigen der Verbindungsvorrichtung mit dem Schutzblech.

10. Halteteil nach Anspruch 8, **dadurch gekennzeichnet, dass** die Anbringungsmittel eine durch den Stiel (13) definierte Widerlageroberffäche (14) umfassen, die die im Verhältnis zu der medianen Längsachse des durchgehenden Gehäuses gekippt ist.

11. Halteteil nach einem oder mehreren der vorstehenden Ansprüche, **dadurch gekennzeichnet, dass** die Anbringungsmittel einen Knebelstift (15) mit einem elliptischen Kopf (16) umfassen, der ein einzelnes Bauteil zusammen mit einem starren Schaft (17) bildet, wobei der starre Schaft mit dem männlichen Element vereinigt und so positioniert ist, dass seine Längsachse im Verhältnis zu der medianen Längsachse des Halteorgans gekippt ist.

12. Halteteil nach Anspruch 11, **dadurch gekennzeichnet, dass** das Schutzblech eine Mehrzahl spezifisch ausgeformter Einkerbungen (102) aufweist, die Form eines T konfiguriert und nahe der Seitenkante ausgebildet sind, wobei der Teil sämtlicher spezifisch ausgeformter Einkerbungen im Wesentlichen parallel zu der Seitenkante eine Form aufweist, die im Wesentlichen komplementär zu dem Profil des ellipsenförmigen Kopfes ist, wobei der Teil sämtlicher der spezifisch ausgeformten Einkerbungen, der dem Verhältnis zu der Seitenkante gekippt ist, eine Form aufweist, die im Wesentlichen komplementär zum Profil des starren Schafts (17) ist.

13. Halteteil nach Anspruch 11 oder 12, **dadurch gekennzeichnet, dass** das Schutzblech eine Mehrzahl von Aussparungen (103) umfasst, die nahe dessen Seitenkante angeordnet sind und eine Form aufweisen, die im Wesentlichen komplementär zu dem Profil des ellipsenförmigen Kopfes ist, wobei die Aussparungen so angeordnet sind, dass ihre Längsachse in Verhältnis zur Längsachse des ellipsenförmigen Kopfes gekippt ist, wenn diese in der fixierten Position ist.

14. Halteteil nach Anspruch 11, 12 oder 13, **dadurch gekennzeichnet, dass** das Fixierungsmittel ein Paar Rippen umfasst, die durch das männliche Element vorgesehen sind, nahe dem Knebelbolzen und gekippt im Bezug auf die Längsachse des starren Schafts.

15. Halteteil nach einem oder mehreren der Ansprüche 11 -14, **dadurch gekennzeichnet, dass** das durchgängige Gehäuse einen exzentrischen Drehsitz aufweist mit einer im Wesentlichen zylindrischen Konfiguration, der auf dem weiblichen Element nahe der Anschlagsoberfläche angeordnet ist, wobei die mediane Längsachse (200) des durchgehenden Gehäuses in der Richtung der spezifisch ausgeformten Knarre versetzt ist, und zwar im Verhältnis zur Mitte des exzentrischen Drehsitzes.

16. Halteteil nach einem oder mehreren der Ansprüche 11-15, **dadurch gekennzeichnet, dass** das Halteorgan einen exzentrischen Drehbolzen mit einer im Wesentlichen zur Konfiguration des exzentrischen Drehsitzes im Wesentlichen komplementäre Konfiguration umfasst, der an einem Ende des Halteorgans mit dem männlichen Element vereinigt ist, wobei die mediane Längsachse des Halteorgans in Richtung des Knebelbolzens im Verhältnis zur Mitte des exzentrischen Drehsüzes versetzt ist.

17. Halteteil nach einem oder mehr der vorstehenden Ansprüche, **dadurch gekennzeichnet, dass** das weibliche Element ein Paar vorstehender Führungslappen (19) aufweist, die diametral einander gegenüber angeordnet sind.

## Revendications

1. Dispositif d'attache pour des garde-boue (100) et des tiges supports (101), comprenant un élément mâle (3) composé d'un guide conçu pour recevoir ladite tige support, et un élément femelle (2) couplé de manière amovible au dit élément mâle (3), ledit dispositif d'attache pouvant être attaché de manière amovible au dit garde-boue, ledit dispositif comprenant des moyens de fixation rotatifs afin relier de manière amovible ledit dispositif d'attache au dit garde-boue, et de relier de manière amovible ladite tige support au dit dispositif d'attache, en passant d'une position de repos à une position de fixation, ledit dispositif étant **caractérisé en ce que** lesdits moyens de fixation rotatifs comprennent un logement en forme de cuvette (4) à l'intérieur dudit élément femelle, ledit logement en forme de cuvette étant composé d'une paire de cavités semi-cylindriques (6a, 6b), réunies sur le côté par rapport au grand diamètre et décalées d'une manière telle que ceci forme une paire d'évidements (7a, 7b) opposés diamétralement l'un par rapport à l'autre sur la longueur totale du logement en forme de cuvette, chacune desdites cavités semi-cylindriques ayant une coupe transversale essentiellement semi-elliptique.

2. Dispositif d'attache selon la revendication précédente, **caractérisé en ce que** lesdits moyens de fixation rotatifs peuvent être actionnés par rotation relative dudit élément mâle et dudit élément femelle, sur une rotation essentiellement de 90°.

3. Dispositif d'attache selon l'une ou plusieurs des revendications précédentes, **caractérisé en ce que** ledit logement en forme de cuvette comprend une configuration conique.

4. Dispositif d'attache selon l'une ou plusieurs des revendications précédentes, **caractérisé en ce que** lesdits moyens de fixation rotatifs comprennent un organe de retenue (5) attaché à l'élément mâle en une seule pièce, ledit organe de retenue ayant une section transversale qui correspond essentiellement à la section transversale dudit logement en forme de cuvette, et qui est composé de deux composants semi-cylindriques (8a, 8b), qui se font face mais qui ne sont pas réunis, sur le côté par rapport au diamètre, lesdits composants semi-cylindriques étant décalés dans une mesure plus importante que lesdites cavités semi-cylindriques (6), lesdits diamètres desdits composants semi-cylindriques étant essentiellement parallèles auxdits grands diamètres desdites cavités semi-cylindriques, lorsqu'ils se trouvent dans ladite position de repos, et se trouvant à angles droits par rapport aux grands diamètres desdites cavités semi-cylindriques lorsqu'ils se trouvent dans ladite position fixée.

5. Dispositif d'attache selon la revendication 4, **caractérisé en ce que** ledit organe de retenue comprend un guide ayant une section transversale qui est essentiellement complémentaire de la section transversale de ladite tige support, ledit guide étant positionné sur l'axe longitudinal médian dudit organe de retenue sur l'intégralité de sa longueur, en s'étendant partiellement à l'intérieur dudit élément mâle.

6. Dispositif d'attache selon la revendication 4 ou 5, **caractérisé en ce que** ledit organe de retenue comprend une tête de pointe, essentiellement composée de deux demi-cônes tronqués (10a, 10b) centrés par rapport au dit axe longitudinal médian dudit organe de retenue et respectivement réunis auxdits composants semi-cylindriques.

7. Dispositif d'attache selon la revendication précédente, **caractérisé en ce que** lesdits moyens de fixation rotatifs comprennent un moyen de blocage afin d'arrêter de manière amovible ladite rotation et de garantir qu'il tourne dans une seule direction.

8. Dispositif d'attache selon la revendication 7, **caractérisé en ce que** lesdits moyens de blocage comprennent un cliquet ayant une forme spécifique qui interagit avec ledit garde-boue, ledit cliquet ayant une forme spécifique (11) étant essentiellement configuré suivant une forme de coin et étant réuni en une seule pièce avec ledit élément femelle pour former une seule pièce, au moyen d'un pédicule (13) placé à proximité du rebord aigu dudit coin.

9. Dispositif d'attache selon l'une ou plusieurs des revendications précédentes, **caractérisé en ce que** lesdits moyens de fixation rotatifs comprennent des moyens d'attache permettant de fixer ledit dispositif de raccordement au dit garde-boue.

10. Dispositif d'attache selon la revendication 8, **caractérisé en ce que** lesdits moyens d'attache comprennent une surface de butée (14) définie par ledit pédicule (13), réglée inclinée par rapport au dit axe longitudinal médian dudit logement en forme de cuvette.

11. Dispositif d'attache selon l'une ou plusieurs des revendications précédentes, **caractérisé en ce que** lesdits moyens d'attache comprennent une clavette d'articulation (15) ayant une tête ellipsoïdale (16) qui forme un seul élément avec une tige rigide (17), ladite tige rigide étant réunie au dit élément mâle, et étant positionnée avec son axe longitudinal incliné par rapport au dit axe longitudinal médian dudit organe de retenue.

12. Dispositif d'attache selon la revendication 11, **caractérisé en ce que** ledit garde-boue comprend une pluralité de crans ayant une forme spécifique (102), configurés suivant la forme d'un T et formés à proximité dudit rebord latéral, la portion de chacun desdits crans ayant une forme spécifique étant essentiellement parallèle au dit rebord latéral ayant une forme qui est essentiellement complémentaire au profil de ladite tête ellipsoïdale, la portion de chacun desdits crans ayant une forme spécifique étant inclinée par rapport au dit rebord latéral ayant une forme qui est essentiellement complémentaire au profil de ladite tige rigide (17).

13. Dispositif d'attache selon la revendication 11 ou 12, **caractérisé en ce que** ledit garde-boue comprend une pluralité de fentes (103) positionnées à proximité de son rebord latéral et ayant une forme qui est essentiellement complémentaire au profil de ladite tête ellipsoïdale, lesdites fentes étant agencées d'une manière telle que leur axe longitudinal est incliné par rapport à l'axe longitudinal de ladite tête ellipsoïdale, lorsqu'elle se trouve dans ladite position fixée.

14. Dispositif d'attache selon les revendications 11, 12 ou 13, **caractérisé en ce que** lesdits moyens de fixation comprennent une paire d'ailettes fournies par ledit élément mâle à proximité de ladite clavette d'articulation inclinée par rapport au dit axe longitudinal de ladite tige rigide.

15. Dispositif d'attache selon l'une ou plusieurs des revendications 11 à 14, **caractérisé en ce que** ledit logement en forme de cuvette comprend un siège de rotation à excentrique ayant une configuration essentiellement cylindrique positionnée sur ledit élément femelle à proximité de ladite surface de choc, l'axe longitudinal médian (200) dudit logement en forme de cuvette étant décentralisé dans la direction dudit cliquet et dans une forme spécifique par rapport au centre dudit siège de rotation excentrique.

16. Dispositif d'attache selon l'une ou plusieurs revendications 11 à 15, **caractérisé en ce que** ledit organe de retenue comprend une clavette de rotation à excentrique ayant une configuration essentiellement complémentaire à celle du siège de rotation à excentrique, fourni à l'extrémité dudit organe de retenue réuni au dit élément mâle, l'axe longitudinal médian dudit organe de retenue étant décentralisé dans la direction de ladite clavette d'articulation par rapport au centre de ladite clavette de rotation à excentrique.

17. Dispositif d'attache selon l'une ou plusieurs des revendications précédentes, **caractérisé en ce que** ledit élément femelle comprend une paire de pattes (19) en saillie positionnées diamétralement opposées l'une par rapport à l'autre.
